# EUROPÄISCHE PATENTANMELDUNG

(11) **EP 3 239 370 A1**
(43) Veröffentlichungstag der Anmeldung: **01.11.2017**
(21) Anmeldenummer: 17166170.5
(22) Anmeldetag: 12.04.2017
(51) Int. Cl.: D01G 7/14

(54) **VERFAHREN ZUR LÄNGSPOSITIONSBESTIMMUNG UND ZUR LÄNGSPOSITIONIERUNG EINES ABTRAGORGANS EINES BALLENÖFFNERS UND BALLENÖFFNER**

(30) Priorität: 22.04.2016 CH 5372016
(71) Anmelder: Maschinenfabrik Rieter AG, 8406 Winterthur (CH)
(72) Erfinder: SCHMID, Alexander, 8400 Winterthur (CH); BRAUN, Lukas, 8408 Winterthur (CH)

(57) **Zusammenfassung**

Die Erfindung bezieht sich auf ein Verfahren zur Längspositionsbestimmung und zur Längspositionierung eines Abtragorgans (3) eines Ballenöffners (1) an einer Ballengruppe (4). Erfindungsgemäss wird die absolute Position des Abtragorgans (3) durch einen Barcodeleser (13) bestimmt wird, welche am Ballenöffner (1) befestigte Barcodes (12) liest und das Abtragorgan (3) mit einem Motor (14) an die gewünschte Längsposition befördert. Die Erfindung bezieht sich auch auf einen entsprechenden Ballenöffner (1).

## Beschreibung

### Technisches Gebiet

Die Erfindung bezieht sich auf Verfahren zur Längspositionsbestimmung und zur Längspositionierung eines Abtragorgans in eines Ballenöffners an einer Ballengruppe und auf einem Ballenöffner gemäss den unabhängigen Ansprüchen.

### Stand der Technik

Abtragorgane werden in sogenannten Ballenabtragmaschinen oder Ballenöffnern eingesetzt, um Fasern oder Faserflocken aus gepressten Faserballen heraus zu lösen. Dazu wird das Abtragorgan über die Faserballen hinweg bewegt.

Die Ballenabtragmaschine steht am Anfang von Verfahrenslinien in einer Spinnereivorbereitung (Putzerei) zur Verarbeitung von Fasergut, beispielsweise Baumwolle oder synthetische Fasern oder deren Mischungen, und hat einen entscheidenden Einfluss auf die Kontinuität der Abläufe innerhalb der Spinnereivorbereitung. In der Ballenabtragmaschine wird das in Ballen angelieferte Fasergut durch ein Abtragen von Faserflocken von den Ballen gelöst und in ein pneumatisches Transportsystem übergeben. Das pneumatische Transportsystem bringt die Faserflocken durch Rohrleitungen zu den nachfolgenden Reinigungsmaschinen. Das Abtragorgan ist an einem fahrbaren Abtragturm höhenverstellbar befestigt und umfasst eine oder mehrere Abtragwalzen mit auf dessen Oberfläche angebrachten Zähnen, einen unterhalb der Abtragwalze angebrachtes Rückhalteelement und eine Absaughaube. Durch das Verfahren des Abtragorgans entlang den Faserballen greifen die Zähne in die Faserballen ein und reissen oder zupfen aufgrund der Rotation der Abtragwalze Fasern, respektive Faserflocken aus dem Faserballen heraus. Die herausgerissenen Faserflocken werden durch die an eine Unterdruckquelle angeschlossene Absaughaube von der Abtragwalze übernommen und dem Transportsystem zugeführt.

Es sind nun aus dem Stand der Technik verschiedene Verfahren bekannt, um die Längsposition des Abtrageorgans des Ballenöffners zu bestimmen oder aufgrund eines bestimmten Sollwerts das Abtrageorgan entsprechend zu positionieren. Beispielsweise ist am verfahrbaren Abtragorgan, dem sogenannten Abtragturm, oder am Fahrgestell ein Reibrad befestigt, das auf einem ortsfesten, horizontal angeordneten Flockenabsaugkanal abrollt. Auf der Welle des Reibrades ist koaxial eine Zählscheibe mit Schlitzöffnungen angeordnet, wobei dem Bereich mit den Schlitzöffnungen zwei ortsfeste induktive Sensoren zugeordnet sind. Durch diese Sensoren werden die Umdrehungen des Reibrades gezählt. Mit einer Auswerteeinrichtung wird aus den gezählten Impulsen der Sensoren der Standort des Abtragturmes in Längsrichtung ermittelt. Ein Nachteil dieser Anordnung ist es, dass die Verwendung eines Reibrades bei ungenügender Anpresskraft oder verschmutzter Lauffläche ein Schlupf auftreten kann. Dabei entspricht die Umdrehung des Reibrade nicht mehr der zurückgelegten Länge und die Messung wird ungenau. Ebenfalls ist die mechanische Einstellung der Vorrichtung sehr exakt vorzunehmen und periodisch zu wiederholen resp. zu überprüfen, da auch Abnutzungserscheinungen auftreten können.

In einer anderen Variante ist über die gesamte Länge der Ballenabtragsmaschine ein Balken mit schlitzförmigen Ausnehmungen angebracht. Auf der Höhe der Ausnehmungen werden am Abtragturm induktive Sensoren mitgeführt. Mit diesen Sensoren wird die Anzahl überfahrener Schlitze gezählt und mit einer Auswerteeinrichtung daraus die durch den Abtragturm zurückgelegte Länge ermittelt. Auch in dieser Anwendung kann durch die Verwendung mehrere Sensoren über die Erkennung von Vor- oder Rückwärtsfahrt die Position des Abtragturmes zusätzlich zur zurückgelegten Länge bestimmt werden. Ein Nachteil dieser Anordnung ist es, dass der am Flockenaustragskanal angebrachte Balken auf seiner gesamten bis zu 50 oder mehr Metern Länge sehr genau ausgerichtet sein muss, weil die Messung mit induktiven Sensoren in einem engen Toleranzfeld zuverlässig funktioniert. Die Sensoren sind über die gesamte Länge in einem Abstand von wenigen Millimetern vom Balken zu führen. Ein weiterer, die Zuverlässigkeit der Messung beeinträchtigender, Nachteil ist, dass die Messsonden wie auch der Balken einer zwangsläufigen Verschmutzung ausgeliefert sind. Die Bauteile sind ausserhalb des Flockenaustragkanals angebracht und damit gegenüber der Umgebung nicht geschützt.

Die Patentschrift CH686188A5 zeigt eine Längenmessung, bei welcher ein inkrementaler Drehweggeber verwendet wird. Die Achse dieses Drehweggebers ist mit einem rotierenden Zahnelement, wie zum Beispiel einem Zahnrad, verbunden, dieses Zahnrad wiederum greift in ein passendes Gegenelement, welches ortsfest angebracht ist. Praktischerweise ist am ortsfest montierten Flockenabsaugkanal eine Zahnstange oder ein Zahnriemen oder ähnliches befestigt. Am verfahrbaren Abtragturm ist der Drehweggeber angebracht, welcher bei Bewegung des Abtragturmes durch den Zahneingriff in die am Flockenabsaugkanal angebrachte Zahnstange in eine der Längsbewegung entsprechende Drehbewegung versetzt wird. Über eine Auswerteeinheit wird die translatorische Bewegung des Abtragturms errechnet und seine Position ermittelt. Ein Nachteil dieser Anordnung ist, dass über die ganze Länge des möglichen Verfahrweges des Abtragturmes eine Messeinrichtung oder zumindest Teile davon wie zum Beispiel eine Zahnstange angeordnet sein müssen. Da ein exaktes Zusammenspiel der Bauteile notwendig ist, muss die Messeinrichtung in ihrer ganzen Länge mit einer geringen Toleranz ausgerichtet sein. Bei Beschädigung oder Verschmutzung können Messfehler verursacht werden. Eine derartige Messung ist teuer in ihrem Aufbau und Unterhalt.

DE102005013076 betrifft eine Vorrichtung zum Abtragen des Fasergutes von Textilfaserballen aus Spinngut mittels einer Fräsvorrichtung, bei der ein mittels eines Wagens mit Fahrmotor in bezug auf das Fasergut hin- und herverfahrbarer Turm mindestens einen quer zur Bewegungsrichtung sich erstreckenden Ausleger mit der Fräsvorrichtung aufweist, wobei der Ausleger mit Abtragvorrichtung in Höhenrichtung des Turms mittels eines Hubmotors bewegt werden kann, und wobei zur Standortbestimmung in Längsrichtung ein beweglicher Abstandssensor vorhanden ist.

EP0415156 offenbart verschiedene schlupffreie Längsmesseinrichtungen, welche zur Ermittlung der Längsposition des Abtragorganes entlang der Ballenreihe dienen. Dies geschieht insbesondere durch eine Abtasteinrichtung, welche ein Rad, das am Turm angeordnet schlupffrei entlang der Schiene abrollt, abtastet, wobei ein Impulsgeber zur Abgabe von Impulsen mit dem Rad gekoppelt ist.

In DE3335792 werden die Ballengrenzen, d.h. Anfang und Ende der Ballenschau bzw. der Komponentengrenzen, unmittelbar und direkt durch einen Sensor festgestellt. Außerdem wird die Fahrstrecke des am Wagen angeordneten Sensors durch eine Meßeinrichtung festgestellt. Aus der Kombination der elektrischen Signale des Sensors und der Meßeinrichtung ergibt sich der Meßwert für die Position der Ballengrenzen, der der Steuervorrichtung zugeführt wird, die Beginn und Ende des Abarbeitungsvorganges steuern kann.

WO2008037096 betrifft eine Vorrichtung zum Abtragen von Fasergut mit einer Ballenabtragmaschine, welche einen verfahrbaren Abtragturm und einen ortsfesten Faserabsaugkanal aufweist. Der Faserabsaugkanal ist mit einer beweglichen Abdeckung versehen, welche an mindestens einer ihrer Umlenkstellen mit Mitteln für die Bestimmung einer Längsbewegung des Abtragturms ausgerüstet ist.

Nachteil dieser Verfahren ist jedoch, dass sie relativ unpräzise sind und Synchronisationsfahrten notwendig sind, um diese vorab zu kalibrieren.

### Darstellung der Erfindung

Der Erfindung liegt somit die Aufgabe zugrunde, Verfahren und einen Ballenöffner zu schaffen, die die Nachteile, die im Stand der Technik vorhanden sind, vermeiden.

Der Erfindung liegt weiter die Aufgabe zugrunde, Verfahren und einen Ballenöffner zu schaffen, bei welchem eine präzise Positionsbestimmung des Abtragorgans möglich ist.

Der Erfindung liegt weiter die Aufgabe zugrunde, Verfahren und einen Ballenöffner zu schaffen, bei welchem die Anfangs- und Endposition einer Ballengruppe an der Bedienung eingegeben werden kann.

Der Erfindung liegt weiter die Aufgabe zugrunde, Verfahren und einen Ballenöffner zu schaffen, bei welchem kein Synchronisationsfahren mehr nötig ist und bei welche verbesserte Überwachungsmöglichkeiten bestehen.

Diese Aufgaben werden durch Verfahren mit den Verfahrensschritten gemäss dem unabhängigen Verfahrensanspruch und durch einen Ballenöffner mit den Merkmalen des unabhängigen Sachanspruchs gelöst.

Vorteilhafte Ausführungsformen der Erfindung sind Gegenstand der Unteransprüche.

Diese Aufgaben werden auch durch Verfahren zur Positionierung eines Abtragorgans eines Ballenöffners an einer Ballengruppe gelöst, welches dadurch gekennzeichnet, dass
(a) ein Sollwert der Position des Abtragorgans vorgegeben wird;
(b) der absolute Standort des Abtragorgans entlang der Ballengruppe durch einen Barcodeleser bestimmt wird, welche am Ballenöffner befestigte Barcodes liest; und
(c) das Abtragorgan durch einen Motor in einer Längsrichtung des Ballenöffners bewegt wird, bis der Barcodeleser den vorgegebenen Sollwert erreicht.

Vorteilhaft kann bei den erfindungsgemässen Verfahren die Position durch einen Barcodeleser festgestellt werden, welcher eine Vielzahl am Ballenöffner befestigter Barcodes liest, die jeweils voneinander verschieden sind. Die Position des Abtragorgans kann damit sehr präzise und absolut festgestellt werden, da der Barcodeleser aufgrund der Codes sehr genau bestimmen kann, welchem Code er senkrecht gegenüber steht. Der Barcodeleser kann die absolute Position des Abtrageorgans aufgrund der Barcodes selber intern berechnen und an die Steuerung weitergeben oder eine Information an die Steuerung weitergeben, die dann die Position des Abtrageorgans ermittelt.

Eine Anfangs- und Endposition einer Ballengruppe kann an dem Ballenöffner eingegeben werden, wenn die Ballengruppe aufgestellt wird. Die Werte der Barcodes, an dem die Ballengruppen stehen, werden von einer Bedienperson abgelesen, und diese können an einer Steuerung oder an anderer Stelle am Ballenöffner eingegeben werden. Die Steuerung kennt also diese Positionen und kann folglich bei Abtragen die Ballenöffner mit dem Abtrageorgan sehr präzise ansteuern.

Diese Aufgaben werden auch durch einen Ballenöffner entsprechend dem Oberbegriff des unabhängigen Sachanspruchs gelöst, welcher dadurch gekennzeichnet ist, dass der Ballenöffner folgender Merkmale umfasst
- Mittel zum Bewegen des Abtragorgans entlang der Ballengruppe in einer Längsrichtung;
- am Ballenöffner befestigte Barcodes; und
- einem Barcodeleser, welche am Ballenöffner befestigte Barcodes liest und die Position des Abtragorgans bestimmt;

Vorteilhaft ergibt die erfindungsgemässe Ausführungsform verbesserte Überwachungsmöglichkeiten und Ansteuerungsmöglichkeiten des Ballenöffners. Es ist insbesondere keine Synchronisationsfahrten mehr nötig, um die Position vor dem Betrieb zu kalibrieren, und eine sehr präzise Messung der Position des Ballenöffners ist möglich.

Die Barcodes können vorteilhaft an einem Transportsystem befestigt sein, wobei der Barcodeleser an einem Fahrwerk befestigt, vorzugsweise geklebt, ist. Damit kann ein sicheres Ablesen der Barcodes gewährleistet werden.

Die Erfindung bezieht sich auch auf ein Computerprogrammprodukt, welches direkt in einen internen Speicher eines erfindungsgemässen Ballenöffners geladen werden kann und Softwarecodeabschnitte umfasst, mit denen die Verfahrensschritte des erfindungsgemässen Verfahrens ausgeführt werden, wenn das Produkt auf dem Ballenöffner läuft.

Weitere Vorteile der Erfindung sind anhand eines nachfolgend beschriebenen und gezeigten Ausführungsbeispiels zu entnehmen.

### Kurze Beschreibung der Figuren

Die Erfindung wird anhand der beigefügten Figuren näher erläutert, wobei
- **Fig. 1**: eine schematische Darstellung eines Ballenöffners zeigt;
- **Fig. 2**: eine schematische Darstellung des Lesens der Barcodes durch einen Barcodeleser; und
- **Fig. 3**: eine schematische Darstellung der an den erfindungsgemässen Verfahren beteiligten Elemente;
darstellen. Es werden nur für die Erfindung wichtigen Merkmale dargestellt. Gleiche Bezugszeichen bezeichnen in unterschiedlichen Figuren gleiche Merkmale.

### Wege zur Ausführung der Erfindung

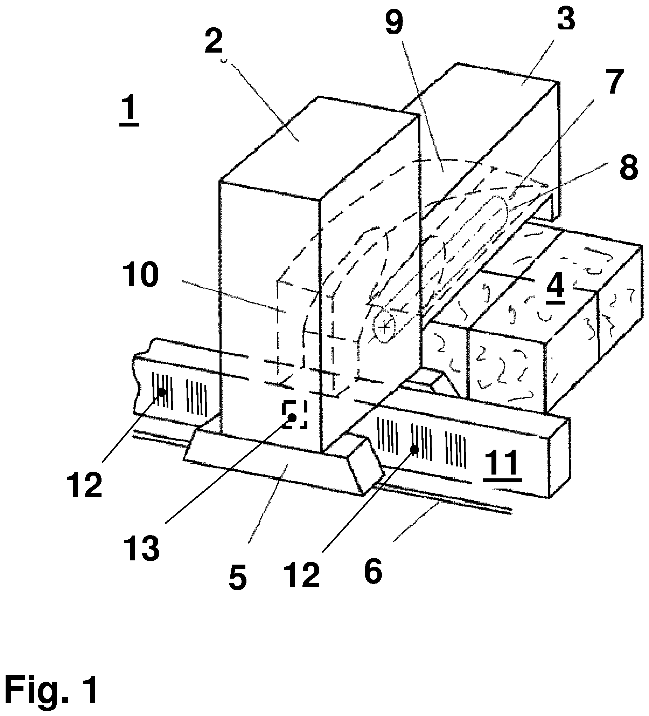

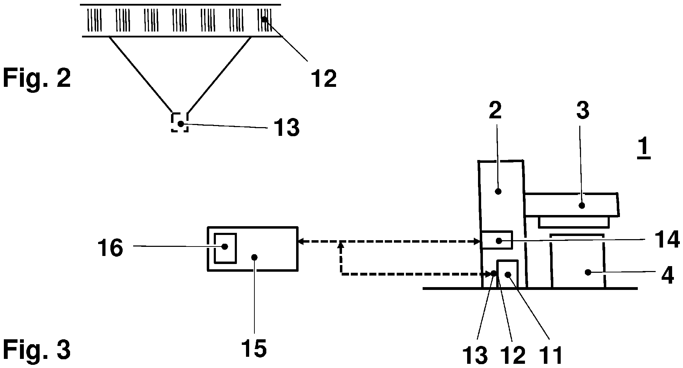

Figur 1 zeigt in einer schematischen Darstellung einen erfindungsgemässen Ballenöffner 1. Der Ballenöffner 1 besteht im Wesentlichen aus einem Abtragturm 2 und einem Abtragorgan 3. Das Abtragorgan 3 ist am Abtragturm 2 einseitig befestigt und frei auskragend über die Ballengruppe 4 angeordnet. Der Abtragturm 2 ist mit einem Fahrwerk 5 ausgerüstet. Mit Hilfe des Fahrwerks 5 wird der Abtragturm 2 auf Schienen 6 entlang der Ballengruppe 4 bewegt. Durch diese Bewegung wird das am Abtragturm 2 angebrachte Abtragorgan 3 über die Oberfläche der unter ihm liegenden Ballengruppe 2 geführt. Die Befestigung des Abtragorgans 3 am Abtragturm 2 ist höhenverstellbar ausgeführt, so dass die Ballengruppe 4 kontinuierlich abgetragen werden können. Im Abtragorgan 3 ist eine Abtragwalze 7 mit einer Achse 8 angeordnet. Die Abtragwalze 7 entnimmt aus der Ballengruppe 4 Faserflocken. Die Faserflocken werden über eine Absaughaube 9 mittels Unterdruck von der Abtragwalze 7 abgenommen und zum Abtragturm 2 geführt. Im Abtragturm 2 ist ein Transportkanal 10 angeordnet, welcher die Faserflocken von der Absaughaube 9 übernimmt und einem pneumatischen Faserflocken-Transportsystem 11 zuführt. Der Transportkanal 10 und damit auch die Absaughaube 9 stehen unter einem bestimmten Unterdruck, der zur pneumatischen Förderung der Faserflocken zum Transportkanal 10 dient. Erfindungsgemäss ist nun am Transportsystem 11 zum Fahrwerk 5 hingerichtet eine Vielzahl von verschiedenen Barcodes 12 angebracht, beispielsweise geklebt. Die Barcodes 12 sind jeweils voneinander verschieden und geben eine absolute Länge wieder. Sie werden von einem Barcodeleser 13, der am Transportsystem 11 angebracht ist, gelesen. Wie in der Fig. 2 sichtbar, liest der Barcodeleser 13 dabei mehrere Barcodes 12 gleichzeitig. Die Bestimmung bzw. Berechnung der absoluten Position geschieht direkt in dem Barcodeleser 13.

Fig. 3 zeigt eine erfindungsgemässe Steuerung des Ballenöffners 1. Der Barcodeleser 13 liest die am Transportsystem 11 befestigten Barcodes 11, bestimmt die absolute Position des Abtragturms 2 bzw. des Abtragorgans 3 und leitet diese Position an die Steuerung 15 mit einem internen Speicher 16 weiter. Prinzipiell könnte aber auch eine Information zur Steuerung 15 des Ballenöffners 1 gesendet werden, die dann die absolute Position ermittelt. Der Abtragturm 2 wird nun in einer Längsrichtung durch einen Servomotor 14 bewegt. Zur Positionierung gibt die Steuerung 15 nun einen Sollwert (gewünschte Position) vor, zu dem das Abtragorgan 3 bewegt werden soll und bewegt den Motor 14 solange bis der Barcodeleser 12 den gewünschten Sollwert angibt. Die Anfangs- und Endposition einer (beispielsweise neu aufgestellten) Ballengruppe 4 kann zudem an der Steuerung 15 oder an einer anderen Stelle im Ballenöffner 1 eingegeben werden. Dazu werden die Werte des am Anfang / Ende der Ballengruppe 4 vorhandenen Barcodes 12 abgelesen und angegeben. Die Steuerung kennt also alle Positionen der Ballengruppen 4 und kann diese sehr genau anfahren. Vorteilhaft ergibt die erfindungsgemässe Ausführungsform verbesserte Überwachungsmöglichkeiten des Ballenöffners 1. Es ist insbesondere keine Synchronisationsfahrten mehr nötig, und eine sehr präzise Messung der Position des Ballenöffners ist möglich.

Die Erfindung bezieht sich auch auf ein Computerprogrammprodukt, welches direkt in den internen Speicher 16 eines Ballenöffners 1 geladen werden kann und Softwarecodeabschnitte umfasst, mit denen die Verfahrensschritte des erfindungsgemässen Verfahrens ausgeführt werden, wenn das Produkt auf dem Ballenöffner läuft.

### Bezugszeichenliste

- 1: Ballenöffner
- 2: Abtragturm
- 3: Abtragorgan
- 4: Ballengruppe
- 5: Fahrwerk
- 6: Schiene
- 7: Antragwalze
- 8: Achse
- 9: Absaughaube
- 10: Transportkanal
- 11: Transportsystem
- 12: Barcode
- 13: Barcodeleser
- 14: Motor
- 15: Steuerung
- 16: interner Speicher

## Patentansprüche

1. Verfahren zur Positionierung eines Abtragorgans (3) in Längsrichtung eines Ballenöffners (1) an einer Ballengruppe (4), **dadurch gekennzeichnet, dass**
(a) ein Sollwert der Position des Abtragorgans (3) vorgegeben wird;
(b) der absolute Standort des Abtragorgans (3) entlang der Ballengruppe (4) durch einen Barcodeleser (13) bestimmt wird, welche am Ballenöffner (1) befestigte Barcodes (12) liest; und
(c) das Abtragorgan (3) durch einen Motor (14) in einer Längsrichtung des Ballenöffners (1) bewegt wird, bis der Barcodeleser (13) den vorgegebenen Sollwert erreicht.

2. Verfahren nach Anspruch 1, **dadurch gekennzeichnet, dass** eine Anfangs- und Endposition einer Ballengruppe (4) kann an dem Ballenöffner (1) eingegeben werden.

3. Verfahren nach einem der Ansprüche 1 oder 2, **dadurch gekennzeichnet, dass** die Position durch einen Barcodeleser (12) festgestellt wird, welche am Ballenöffner (1) befestigte Barcodes (12) liest, wobei mehrere Barcodes (12) gleichzeitig gelesen werden, und wobei die Barcodes (12) gelesen werden, die jeweils voneinander verschieden sind.

4. Verfahren nach einem der Ansprüche 1 bis 3, **dadurch gekennzeichnet, dass** die absolute Position im Barcodeleser (13) berechnet wird oder eine Information an die Steuerung weitergeben, die dann die Position des Abtrageorgans ermittelt.

5. Verfahren nach einem der Ansprüche 1 bis 4, **dadurch gekennzeichnet, dass** an einem Transportsystem (11) des Ballenöffners (1) befestigte Barcodes (12) gelesen werden, wobei der Barcodeleser (13) an einem Fahrwerk (5) des Ballenöffners (1) befestigt wird.

6. Ballenöffner (1) zur Durchführung eines der Verfahren nach einem der Ansprüche 1 bis 5, **dadurch gekennzeichnet, dass** der Ballenöffner (1) folgender Merkmale umfasst
• am Ballenöffner (1) befestigte Barcodes (12);
• einem Barcodeleser (13), welche am Ballenöffner (1) befestigte Barcodes (12) liest und die Position des Abtragorgans (3) bestimmt; und
• ein Motor (14) zum Bewegen des Abtragorgans (3) entlang der Ballengruppe (4) in einer Längsrichtung;

7. Ballenöffner (1) nach Anspruch 6, **dadurch gekennzeichnet, dass** Mittel (15) vorhanden sind, um einen Sollwert einer Position des Abtragorgans (3) vorzugeben.

8. Ballenöffner (1) nach einem Anspruch 6 oder 7, **dadurch gekennzeichnet, dass** die Barcodes (12) an einem Transportsystem (11) des Ballenöffners (1) befestigt sind, und der Barcodeleser (13) an einem Fahrwerk (5) des Ballenöffners (1) befestigt ist.

9. Ballenöffner (1) nach einem der Ansprüche 6 bis 8, **dadurch gekennzeichnet, dass** Mittel (15) vorhanden sind, um eine Anfangs- und Endposition einer Ballengruppe (4) an dem Ballenöffner (1) einzugeben.

10. Ballenöffner (1) nach einem der Ansprüche 6 bis 9, **dadurch gekennzeichnet, dass** Barcodes (12) am Ballenöffner (1) befestigt sind, die jeweils voneinander verschieden sind.

11. Ballenöffner (1) nach einem der Ansprüche 6 bis 10, **dadurch gekennzeichnet, dass** die Barcodes (12) am Ballenöffner (1) angeklebt sind.

12. Computerprogrammprodukt, **dadurch gekennzeichnet, dass** es direkt in einen internen Speicher (16) eines Ballenöffners (1) geladen werden kann und Softwarecodeabschnitte umfasst, mit denen die Verfahrensschritte gemäss einem der Ansprüche 1 bis 6 ausgeführt werden, wenn das Produkt auf dem Ballenöffner (1) läuft.
